(19)

**Europäisches Patentamt**
**European Patent Office**
**Office européen des brevets**

(11) **EP 3 217 531 A1**

(12) **EUROPÄISCHE PATENTANMELDUNG**

(43) Veröffentlichungstag:
**13.09.2017 Patentblatt 2017/37**

(51) Int Cl.:
*H02P 6/16* (2016.01)  *G01D 5/14* (2006.01)

(21) Anmeldenummer: **16158894.2**

(22) Anmeldetag: **07.03.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **HILTI Aktiengesellschaft**
**9494 Schaan (LI)**

(72) Erfinder:
• **Beck, Wolfgang**
  **86987 Schwabsoien (DE)**
• **Wissmach, Walter**
  **80637 Muenchen (DE)**
• **Rank, Markus**
  **86807 Buchloe (DE)**

(74) Vertreter: **Hilti Aktiengesellschaft**
**Corporate Intellectual Property**
**Feldkircherstrasse 100**
**Postfach 333**
**9494 Schaan (LI)**

(54) **HANDWERKZEUGMASCHINE UND DREHWINKELKORREKTURVERFAHREN**

(57)     Elektrische Handwerkzeugmaschine (100) mit einem elektronisch kommutierten Elektromotor (90) zum rotatorischen Antreiben einer Motorwelle (80) der Handwerkzeugmaschine (100), einer zum Messen eines Drehwinkels (α) der Motorwelle (80) vorgesehenen Winkelmesseinheit (70), die einen mit der Motorwelle (80) mitdrehenden Magnetring (75) und wenigstens einen Hallsensor (H1, H2, H3) aufweist, und mit einer Steuereinheit (60) die mit der Winkelmesseinheit (70) und dem Elektromotor (90) verbunden ist und ausgebildet ist den Elektromotor (90) unter Berücksichtigung des Drehwinkels (α) zu kommutieren, wobei die Steuereinheit (60) weiter ausgebildet ist den Elektromotor (90) anhand eines in situ korrigierten Drehwinkels (α*) zu kommutieren, der durch die Steuereinheit (60) auf Basis eines Zeitabstands zwischen einem Detektionszeitpunkt (t*) einer ersten detektierten Hallflanke (H1d, H2d, H3d) und einem Detektionszeitpunkt einer zweiten, insbesondere durch den gleichen Hallsensor (H1, H2, H3) detektierten Hallflanke (H1d', H2d', H3d') bei quasistationärer Motordrehzahl berechnet ist.

Fig 1

**EP 3 217 531 A1**

**Beschreibung**

Die vorliegende Erfindung betrifft eine elektrische Handwerkzeugmaschine mit einem elektronisch kommutierten Elektromotor zum rotatorischen Antreiben einer Motorwelle der Handwerkzeugmaschine. Die Handwerkzeugmaschine weist eine zum Messen eines Drehwinkels der Motorwelle vorgesehene Winkelmesseinheit auf, die einen mit der Motorwelle mitdrehenden Magnetring und wenigstens einen Hallsensor aufweist. Die Handwerkzeugmaschine weist weiterhin eine Steuereinheit auf, die mit der Winkelmesseinheit und dem Elektromotor verbunden ist und ausgebildet ist, den Elektromotor unter Berücksichtigung des Drehwinkels zu kommutieren.

Die Erfindung betrifft ebenfalls ein Verfahren zur Berechnung eines korrigierten Drehwinkels zwecks elektronischen Kommutierens eines Elektromotors einer Handwerkzeugmaschine.

Zur Kommutierung von elektronisch kommutierten Elektromotoren ist die Kenntnis des Drehwinkels unerlässlich. Eine Möglichkeit zur Winkelerfassung ist die Abtastung eines mit der Motorwelle mitdrehenden Magnetrings durch einen oder mehrere Hallsensoren. Die Hallsensoren können die Polarität des anliegenden Magnetfelds detektieren, ein Wechsel in der Feldrichtung hat im elektrischen Sensorsignal eine steigende oder fallende Flanke zur Folge. Auf Basis konstruktiver Abmessungen lässt sich jeder Flanke in Kombination mit dem Pegel der anderen Hallsignale ein Winkel zuordnen.

Nachteilig ist, dass ungleich große magnetische Segmente und/oder eine Abweichung der Positionierung der Hallsensoren um den Magnetring oder etwa eine Fehlstellung des Magnetrings in Bezug auf die Motorwelle zu Fehlern in der Drehwinkelerfassung führen können. Dadurch nimmt die Güte der Kommutierung des Elektromotors ab, was zu einer höheren Drehmomentwelligkeit, geringerem Drehmoment und stärkerer Erwärmung führen kann.

Ausgehend von diesen Nachteilen ist es Aufgabe der vorliegenden Erfindung, eine elektrische Handwerkzeugmaschine und ein Verfahren zur Berechnung eines korrigierten Drehwinkels zu schaffen, die eine Verbesserung der Güte der Kommutierung des Elektromotors begünstigen.

Die Aufgabe wird bei einer elektrische Handwerkzeugmaschine der eingangs genannten Art dadurch gelöst, dass die Steuereinheit der elektrischen Handwerkzeugmaschine weiter ausgebildet, den Elektromotor anhand eines in situ korrigierten Drehwinkels zu kommutieren, der durch die Steuereinheit auf Basis eines Zeitabstands zwischen einem Detektionszeitpunkt einer ersten detektierten Hallflanke und einem Detektionszeitpunkt einer zweiten, insbesondere durch den gleichen Hallsensor detektierten Hallflanke bei quasi stationärer Motordrehzahl berechnet ist.

Die Erfindung schließt die Erkenntnis ein, dass Fertigungs- und Positionierungstoleranzen sowie Magnetisierungsungenauigkeiten auf Basis eines Zeitabstands zwischen zwei Detektionszeitpunkten bei quasi stationärer Motordrehzahl besonders einfach und zuverlässig und somit auch kostengünstig kompensiert werden können.

Die Erfindung schließt ebenfalls die Erkenntnis ein, dass insbesondere eine individuelle Anpassung des Spannungswellenschwellwertes, ab welchem ein Wechsel der magnetischen Polarität erkannt wird - dies ist grundsätzlich aus dem Stand der Technik bekannt - etwaige Toleranzen nur bis zu einem gewissen Grad ausgleichen können. Dies hat den Nachteil, dass bei einer Mikroprozessor-Implementierung Hallspannungen analog erfasst werden und verarbeitet werden müssen. Dies wirkt sich negativ auf die Rechenlast aus. Des Weiteren ist eine analoge Messwerterfassung langsamer als eine reine Flankendetektion, somit nimmt die Genauigkeit bei hohen Drehzahlen ab. Ferner können mit den bekannten Anordnungen bzw. Verfahren nur Ungenauigkeiten innerhalb einer Flanke ausgeglichen werden. Winkelfehler, welche über den Flankenwechsel hinausgehen, sind aufgrund von Saturierungseffekten nicht erkennbar.

Diese Nachteile werden durch die erfindungsgemäß ausgebildete Handwerkzeugmaschine vermieden.

In einer besonders bevorzugten Ausgestaltung weist der Elektromotor drei Phasen mit jeweils einem Polpaar auf. Vorzugsweise ist für jede der drei Phasen ein Hallsensor, vorzugsweise genau ein Hallsensor, vorgesehen.

Es hat sich als vorteilhaft herausgestellt, wenn die Hallsensoren, bezogen auf eine Rotationsachse der Motorwelle, jeweils um 60 Grad versetzt angeordnet sind. Besonders bevorzugt ist die Steuereinheit ausgebildet, für jede Phase einen eigenen korrigierten Drehwinkel zu berechnen.

In einer weiteren bevorzugten Ausgestaltung ist die Steuereinheit ausgebildet, die Hallflanken digital zu erfassen, insbesondere mittels eines Mikrocontrollers. Auf die damit einhergehenden Vorteile wurde bereits eingangs eingegangen.

Die Erfindung wird ebenfalls gelöst durch ein Verfahren zur Berechnung eines korrigierten Drehwinkels zwecks elektronischen Kommutierens eines Elektromotors einer Handwerkzeugmaschine, bei dem der korrigierte Drehwinkel berechnet wird auf Basis eines Zeitabstands zwischen einem Detektionszeitpunkt einer ersten detektierten Hallflanke und einem Detektionszeitpunkt einer zweiten detektierten Hallflanke bei quasi stationärer Motordrehzahl.

Es hat sich als vorteilhaft herausgestellt, wenn das Verfahren in situ in einer Steuereinheit der Handwerkzeugmaschine ausgeführt wird. Somit können auch Toleranzen, die bei bestimmten Betriebszuständen oder abhängig von einem Alterungszustand einer Handwerkzeugmaschine auftreten, wirksam kompensiert werden.

Es hat sich als besonders vorteilhaft herausgestellt, wenn im Rahmen des Verfahrens Hallflanken dreier Hallsensoren detektiert werden. Vorzugsweise sind die Hallsensoren jeweils einer von drei Phasen des Elektromotors zugeordnet. Besonders bevorzugt erfolgt ein Detektieren digital. Bevorzugt wird für jede Phase ein eigener korrigierter Drehwinkel berechnet. Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:

Fig. 1    ein Ausführungsbeispiel einer erfindungsgemäßen Handwerkzeugmaschine;

Fig. 2    ein Diagramm mit idealen und detektierten Hallflanken über Drehwinkel.

**Ausführungsbeispiel:**

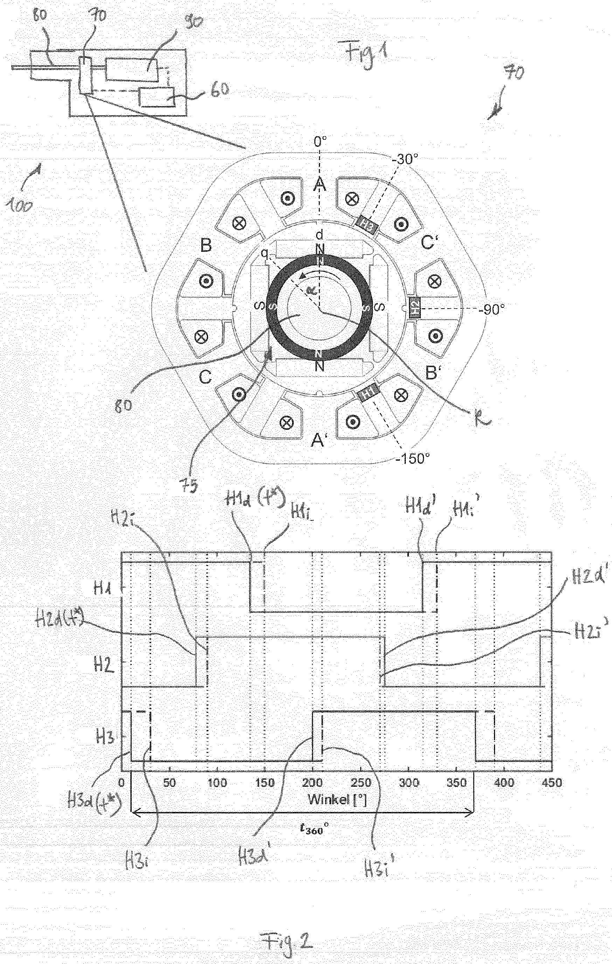

Fig. 1 zeigt im oberen linken Bereich eine elektrische Handwerkzeugmaschine 100 in schematischer Darstellung. Die elektrische Handwerkzeugmaschine weist einen elektronisch kommutierten Elektromotor 90 zum rotatorischen Antreiben einer Motorwelle 80 der Handwerkzeugmaschine auf. Ebenfalls umfasst von der Handwerkzeugmaschine 100 ist eine zum Messen eines Drehwinkels $\alpha$ der Motorwelle 80 vorgesehene Winkelmesseinheit 70. Die Winkelmesseinheit 70 ist auf der rechten Seite der Fig. 1 vergrößert dargestellt.

Die Winkelmesseinheit 70 weist einen mit der Motorwelle 80 mitdrehenden Magnetring 75 und drei Hallsensoren H1, H2, H3 auf. Ebenfalls in Fig. 1 gezeigt ist die Steuereinheit 60 mit der Winkelmesseinheit 70 und dem Elektromotor 90 verbunden. Die Steuereinheit 60 ist ausgebildet, den Elektromotor 90 unter Berücksichtigung des Drehwinkels $\alpha$ zu kommutieren.

Wie der Fig. 1 entnommen werden kann, weist der Elektromotor 90 drei Phasen mit jeweils einem Polpaar A, A'; B, B', C, C' auf. Für jede der drei Phasen ist genau ein Hallsensor H1, H2, H3 vorgesehen. Die Hallsensoren H1, H2, H3 sind, bezogen auf eine Rotationsachse R der Motorwelle 80, um jeweils 60 Grad versetzt angeordnet.

Ein Diagramm mit Hallflanken, die bei einem rotatorischen Antreiben der Motorwelle 80 in entgegengesetzter Uhrzeigerrichtung (vgl. Fig. 1) real detektiert bzw. idealerweise vorhanden wären, sind in Fig. 2 dargestellt.

An der Abszisse des Diagramms der Fig. 2 ist die tatsächliche Winkellage des Drehwinkels $\alpha$ (vgl. Fig. 1) aufgetragen. Der Doppelpfeil bezeichnet dabei eine Rotation der Motorwelle 80 um genau 360 Grad. Der Doppelpfeil ist mit t360° indiziert, das heißt genau der Zeit, die die Motorwelle für genau eine Umdrehung bei konstanter bzw. quasi stationärer Drehzahl benötigt.

Auf der Ordinate sind jeweils digitale Pegel der Hallsensoren H1, H2 und H3 (vgl. Fig. 1) aufgetragen. Mit kleinem Index d bezeichnet sind real detektierte Hallflanken H1d, H2d, H3d; H1d', H2d', H3d', die typischerweise Magnetisierungs- und Positionierungsungenauigkeiten unterliegen. Die Indices H1d, H2d und H3d bezeichnen dabei eine jeweilige erste detektierte Hallflanke. Eine zeitlich darauffolgende zweite Hallflanke ist mit H1d', H2d' sowie H3d' indiziert.

Mit kleinem Index i bezeichnet sind jeweils ideale Hallflanken H1i, H2i, H3i; H1i', H2i', H3i', die bei einer Anordnung detektiert werden würden, die keinerlei Positionierungsungenauigkeiten bzw. Magnetisierungsungenauigkeiten aufweist. Die Indices H1i, H2i, H3i bezeichnen dabei eine jeweilige erste ideale Hallflanke. Eine zeitlich darauffolgende zweite ideale Hallflanke ist mit H1i', H2i', H3i' indiziert.

Wie der Fig. 2 entnommen werden kann, kann ein Versatz zwischen realen und idealen Hallflanken sowohl betragsmäßig als auch vorzeichenmäßig verschieden sein. So eilt beispielsweise bei Hallsensor H1 die detektierte reale Hallflanke H1d der idealen Hallflanke H1i nach. Ein anderes Bild ergibt sich bezüglich Hallsensor H2, wo eine ideale zweite Hallflanke H2i' der real detektierten zweiten Hallflanke H2d' nacheilt.

Erfindungsgemäß wird im Rahmen des Verfahrens sowie durch entsprechende Implementierung in der Steuereinheit die Lage der Polwechsel und die Positionierung der Hallsensoren durch die Messung der Zeitabstände zwischen den Hallflanken bei konstanter oder quasistationärer Drehzahl korrigiert.

Aus Fig. 1 ist ersichtlich, dass bei einem Polpaar A, A'; B, B'; C, C' jeder sechste Polwechsel exakt einer vollen Umdrehung von 360 Grad entsprechen muss. Durch Messung der Zeitabstände zwischen den einzelnen Polwechseln kann bei konstanter Drehzahl die Lage relativ zu einem Referenzpolwechsel berechnet werden. Dies erfolgt bevorzugt anhand der Berechnungsvorschrift:

$$\alpha^* = \frac{t^*}{t_{360°}} \cdot 360° + \alpha_0,$$

wobei a* dem korrigierten Drehwinkel des zum Zeitpunkt t* auftretenden Polwechsels entspricht. t360° entspricht der Zeit, welche für eine volle Umdrehung der Motorwelle bei konstanter bzw. quasistationärer Drehzahl benötigt wird. Der Polwechsel, welcher einem als ideal angenommenen Winkel $\alpha_0$ entspricht, korrespondiert mit dem Zeitpunkt t* = 0.

Es sei darauf hingewiesen, dass in der dargestellten Berechnungsvorschrift kein zeitlicher Abstand zwischen einem Detektionszeitpunkt einer ersten Hallflanke und einem Detektionszeitpunkt einer zweiten Hallflanke dargestellt ist, da der Detektionszeitpunkt der ersten detektierten Hallflanke auf t=0 normiert wurde.

**Bezugszeichenliste**

| | |
|---|---|
| 60 | Steuereinheit |
| 70 | Winkelmesseinheit |
| 75 | Magnetring |
| 80 | Motorwelle |
| 90 | Elektromotor |
| 100 | elektrische Handwerkzeugmaschine |
| A, A'; B, B'; C, C' | Polpaare |
| H1, H2, H3 | Hallsensoren |
| H1d, H2d, H3d | erste detektierte Hallflanke |
| H1i, H2i, H3i | erste ideale Hallflanke |
| H1d', H2d', H3d' | zweite detektierte Hallflanke |
| H1i', H2i', H3i' | zweite ideale Hallflanke |
| R | Rotationsachse der Motorwelle |
| t* | Detektionszeitpunkt |
| $\alpha$ | Drehwinkel |
| $\alpha$* | korrigierter Drehwinkel |

**Patentansprüche**

1. Elektrische Handwerkzeugmaschine (100) mit einem elektronisch kommutierten Elektromotor (90) zum rotatorischen Antreiben einer Motorwelle (80) der Handwerkzeugmaschine (100), einer zum Messen eines Drehwinkels ($\alpha$) der Motorwelle (80) vorgesehenen Winkelmesseinheit (70), die einen mit der Motorwelle (80) mitdrehenden Magnetring (75) und wenigstens einen Hallsensor (H1, H2, H3) aufweist, und mit einer Steuereinheit (60) die mit der Winkelmesseinheit (70) und dem Elektromotor (90) verbunden ist und ausgebildet ist den Elektromotor (90) unter Berücksichtigung des Drehwinkels ($\alpha$) zu kommutieren
**dadurch gekennzeichnet, dass** die Steuereinheit (60) weiter ausgebildet ist den Elektromotor (90) anhand eines in situ korrigierten Drehwinkels ($\alpha$*) zu kommutieren, der durch die Steuereinheit (60) auf Basis eines Zeitabstands zwischen einem Detektionszeitpunkt (t*) einer ersten detektierten Hallflanke (H1d, H2d, H3d) und einem Detektionszeitpunkt einer zweiten, insbesondere durch den gleichen Hallsensor (H1, H2, H3) detektierten Hallflanke (H1d', H2d', H3d') bei quasistationärer Motordrehzahl berechnet ist.

2. Handwerkzeugmaschine (100) Anspruch 1,
**dadurch gekennzeichnet, dass** der Elektromotor (90) drei Phasen mit jeweils einem Polpaar (A, A'; B, B'; C, C') aufweist und für jede der drei Phasen ein Hallsensor (H1, H2, H3) vorgesehen ist.

3. Handwerkzeugmaschine (100) nach Anspruch 2,
**dadurch gekennzeichnet, dass** die Hallsensoren (H1, H2, H3), bezogen auf eine Rotationsachse (R) der Motorwelle (80) jeweils um 60 Grad versetzt angeordnet sind.

4. Handwerkzeugmaschine (100) nach Anspruch 2 oder 3,
**dadurch gekennzeichnet, dass** die Steuereinheit ausgebildet für jede Phase einen eigenen korrigierten Drehwinkel zu berechnen.

5. Handwerkzeugmaschine (100) nach einem der vorangehenden Ansprüche,
**dadurch gekennzeichnet, dass** die Steuereinheit ausgebildet ist, die Hallflanken digital zu erfassen, insbesondere mittels eines Mikrokontrollers.

6. Handwerkzeugmaschine (100) nach einem der vorangehenden Ansprüche,
**dadurch gekennzeichnet, dass** der Zeitabstand mittels eines in der Steuereinheit implementierten Hardware-Timers erfasst wird.

7. Verfahren zur Berechnung eines korrigierten Drehwinkels ($\alpha^*$) zwecks elektronischen Kommutierens eines Elektromotors einer Handwerkzeugmaschine (100) bei dem der korrigierte Drehwinkels ($\alpha^*$) berechnet wird auf Basis eines Zeitabstands zwischen einem Detektionszeitpunkt (t*) einer ersten detektierten Hallflanke (H1d, H2d, H3d) und einem Detektionszeitpunkt einer zweiten detektierten Hallflanke (H1d', H2d', H3d') bei quasistationärer Motordrehzahl.

8. Verfahren nach Anspruch 7,
**dadurch gekennzeichnet, dass** das Verfahren in situ in einer Steuereinheit (60) der Handwerkzeugmaschine (100) ausgeführt wird.

9. Verfahren nach Anspruch 7 oder 8,
**dadurch gekennzeichnet, dass** Hallflanken dreier Hallsensoren, die jeweils einer von drei Phasen des Elektromotors zugeordnet sind, digital detektiert werden.

10. Verfahren nach Anspruch 9,
**dadurch gekennzeichnet, dass** für jede Phase ein eigener korrigierten Drehwinkel berechnet wird.

Fig 1

Fig 2

Europäisches
Patentamt

European
Patent Office

Office européen
des brevets

**EUROPÄISCHER RECHERCHENBERICHT**

Nummer der Anmeldung

EP 16 15 8894

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | WO 03/054556 A1 (LUCAS INDUSTRIES LTD [GB]; SCOTSON PETER GEOFFREY [GB]; WILLIAMS CONNE) 3. Juli 2003 (2003-07-03) * Seite 11, Zeile 16 - Zeile 30; Anspruch 3; Abbildungen 1,2a,2b,3,4,5 * * Seite 1, Zeile 8 - Zeile 15 * * Seite 4, Zeile 29 - Seite 5, Zeile 2 * * Seite 12, Zeile 7 - Seite 14, Zeile 1 * ----- | 1-10 | INV. H02P6/16 G01D5/14 |
| Y | EP 2 408 089 A2 (HILTI AG [LI]) 18. Januar 2012 (2012-01-18) * Absatz [0004] - Absatz [0005]; Abbildungen 1-5 * * Absatz [0048] - Absatz [0058] * * Absatz [0083] * ----- | 1-10 | |
| Y | DE 199 49 106 A1 (ROLAND MAN DRUCKMASCH [DE]) 3. Mai 2001 (2001-05-03) * Seite 1, Zeile 5 - Zeile 8; Anspruch 16; Abbildungen 1-3,7,8a-8c * * Seite 1, Zeile 51 - Zeile 66 * * Seite 2, Zeile 18 - Zeile 21 * * Seite 3, Zeile 10 - Seite 4, Zeile 67 * * Seite 5, Zeile 54 - Seite 6, Zeile 14 * ----- | 1-10 | RECHERCHIERTE SACHGEBIETE (IPC) H02P G01D G01P G05B H02K |
| Y | DE 100 54 530 A1 (DAIMLER CHRYSLER AG [DE]) 14. Februar 2002 (2002-02-14) * Absatz [0016] - Absatz [0051]; Abbildungen 1-6 * ----- | 1-10 | |

Der vorliegende Recherchenbericht wurde für alle Patentansprüche erstellt

| Recherchenort | Abschlußdatum der Recherche | Prüfer |
|---|---|---|
| München | 8. September 2016 | Gospodinova, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

.......................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 15 8894

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2016

| Im Recherchenbericht angeführtes Patentdokument | | Datum der Veröffentlichung | Mitglied(er) der Patentfamilie | | Datum der Veröffentlichung |
|---|---|---|---|---|---|
| WO 03054556 | A1 | 03-07-2003 | AU | 2002347387 A1 | 09-07-2003 |
| | | | DE | 60214588 T2 | 31-05-2007 |
| | | | EP | 1451592 A1 | 01-09-2004 |
| | | | ES | 2268117 T3 | 16-03-2007 |
| | | | JP | 4652688 B2 | 16-03-2011 |
| | | | JP | 2005513483 A | 12-05-2005 |
| | | | KR | 20040070200 A | 06-08-2004 |
| | | | US | 2004251894 A1 | 16-12-2004 |
| | | | WO | 03054556 A1 | 03-07-2003 |
| EP 2408089 | A2 | 18-01-2012 | CN | 102340196 A | 01-02-2012 |
| | | | DE | 102010031399 A1 | 19-01-2012 |
| | | | EP | 2408089 A2 | 18-01-2012 |
| | | | US | 2012014823 A1 | 19-01-2012 |
| DE 19949106 | A1 | 03-05-2001 | KEINE | | |
| DE 10054530 | A1 | 14-02-2002 | KEINE | | |

EPO FORM P0461

Für nähere Einzelheiten zu diesem Anhang : siehe Amtsblatt des Europäischen Patentamts, Nr.12/82